Europäisches Patentamt

**European Patent Office**

Office européen des brevets

(11) Veröffentlichungsnummer: **0 008 053**
**B1**

(12) **EUROPÄISCHE PATENTSCHRIFT**

(45) Veröffentlichungstag der Patentschrift:
01.12.82

(51) Int. Cl.³: **H 02 M 1/08**, H 02 P 13/30,
G 05 F 1/44

(21) Anmeldenummer: **79102702.2**

(22) Anmeldetag: **30.07.79**

(54) **Ansteuerschaltung.**

(30) Priorität: **16.08.78 DE 2835893**

(43) Veröffentlichungstag der Anmeldung:
**20.02.80 Patentblatt 80/4**

(45) Bekanntmachung des Hinweises auf die Patenterteilung:
**01.12.82 Patentblatt 82/48**

(84) Benannte Vertragsstaaten:
**FR GB IT SE**

(56) Entgegenhaltungen:
**DE-A-2 553 764**
**DE-B-1 801 404**
**US-A-3 633 095**

**ELEKTRONIK-INFORMATIONEN Band 7, Nr. 2, 1975,
K. D. Nutz: «Integrierte Ansteuerschaltungen für
Thyristoren und Triacs», Seiten 34 und 36
TECHNISCHE RUNDSCHAU, Band 66, Heft Nr. 34,
1974, K. D. Nutz: «Ein monolithisch integrierter
Nullspannungsschalter», Seiten 25 und 26**

(73) Patentinhaber: **Licentia Patent-Verwaltungs-GmbH,
Theodor-Stern-Kai 1, D-6000 Frankfurt/Main 70 (DE)**

(72) Erfinder: **Nutz, Karl-Diether, Dipl.-Ing.,
Blumenstrasse 33, D-7101 Oedheim (DE)**

(74) Vertreter: **Langer, Karl-Heinz, Dipl.-Ing., Licentia
Patent-Verwaltungs-GmbH Theodor-Stern-Kai 1,
D-6000 Frankfurt/Main 70 (DE)**

## Ansteuerschaltung

Die Erfindung betrifft eine Ansteuerschaltung mit einem Nulldurchgangsdetektor, der zwei Schaltstrecken aufweist, die wechselweise während der beiden Halbwellen eines Wechselstroms stromführend sind und die beide in den Nulldurchgangsphasen des Wechselstroms gesperrt bleiben sowie mit einem Komparator und einer an den Komparator und den Nulldurchgangsdetektor angeschlossenen Logik.

Nulldurchgangsdetektoren sind beispielsweise aus der DE-A-2553764 bekannt. Die bekannten Nulldurchgangsdetektoren werden beispielsweise zur Ansteuerung von Zweiwegthyristoren verwendet. Der vielfach auch als Triac bezeichnete Zweiwegthyristor soll nur während des Nulldurchgangs eines Wechselstroms angesteuert werden, um durch das Schalten verursachte Störungen im Wechselstromnetz auf ein Minimum zu reduzieren. Zusammen mit dem Nullspannungsdetektor werden in einen integrierten Schaltkreis weitere Schaltungsteile eingebaut, die für die störungsfreie Steuerung elektronischer Geräte erforderlich sind. Hierbei handelt es sich beispielsweise um Schaltungen zur Begrenzung und zur Überwachung der Spannung, um Impulsverstärker und um Sägezahn- bzw. Rampengeneratoren. Ferner enthalten diese Schaltungen eine Vollwellenlogik, die sicherstellt, dass zur Steuerung nur Pulspaare verwendet werden, wobei beispielsweise immer mit einem Puls bei positivem du/dt begonnen und mit einem Puls bei negativem du/dt der Wechselspannung der Steuervorgang beendet wird. Ein Nullspannungsschalter, der eine derartige Vollwellenlogik enthält, ist beispielsweise der Schaltkreis U 106 BS der Firma AEG-Telefunken. Dieser Schaltkreis, von dem die Erfindung ausgeht, wird in den «Elektronik-Informationen», Heft 2, 1975, Seiten 34 und 36, sowie in «Technische Rundschau», Heft 34, 1974, Seiten 25 und 26, beschrieben. Er enthält einen Komparator und einen Nulldurchgangsdetektor, die an eine aufwendige Logik zur Erzielung der angestrebten Vollwellenlogik-Funktion angeschlossen sind.

Der Erfindung liegt daher die Aufgabe zugrunde, eine Ansteuerschaltung mit einem Nulldurchgangsdetektor anzugeben, die gleichfalls eine Vollwellenlogik enthält. Die neue Schaltung soll jedoch wesentlich einfacher sein und damit einen geringeren Schaltungsaufwand aufweisen. Insbesondere soll die erwähnte aufwendige Logik, mit der bei der bekannten Schaltung der Komparator und der Nulldurchgangsdetektor miteinander verknüpft sind, entfallen.

Diese Aufgabe wird bei einer Schaltung der eingangs beschriebenen Art erfindungsgemäss dadurch gelöst, dass der Komparator zwischen die Logik und eine der beiden Schaltstrecken des Nulldurchgangsdetektors derart geschaltet ist, dass der während einer Halbwelle des Wechselstroms stromführende Komparator nur während dieser Halbwelle eine Umschaltung der Logik und damit eine An- oder Abschaltung der Steuerlast auslösen kann.

Als Logik wird vorzugsweise ein Speicher-Flip-Flop verwendet. Da der dem Speicher-Flip-Flop vorgeschaltete Komparator beispielsweise nur während der negativen Halbwelle mit Strom versorgt wird, kann auch das Speicher-Flip-Flop seinen Zustand nur während dieser Halbwelle ändern. Dadurch ist gewährleistet, dass der jeweils erste vom Nulldurchgangsdetektor erzeugte Zündimpuls jeder Ansteuerperiode bei positivem du/dt der Wechselspannung erzeugt wird, während der jeweils letzte Zündimpuls bei negativem du/dt auftritt. Durch diese Massnahme wird sichergestellt, dass grundsätzlich nur Impulspaare von der Schaltung frei-gegeben werden, so dass eine die Verteilertransformatoren der Elektroversorgungsunternehmen gefährdende Gleichstromkomponente im Lastkreis zuverlässig verhindert wird. Ausser dem Speicher-Flip-Flop entfällt somit die gesamte bisher notwendige Verknüpfungslogik.

An den Ausgang des Speicher-Flip-Flops ist eine Freigabegatterschaltung angeschlossen. Ein solches Gatter kann beispielsweise aus einem Transistor bestehen, dessen Steuerelektrode an den Ausgang des Speicher-Flip-Flops und dessen Kollektorelektrode an die nur in den Nulldurchgangsphasen des Wechselstroms einen Gleichstrom führende Schaltstrecke des Nulldurchgangsdetektors angeschlossen ist. Diesem Freigabegatter wird vorzugsweise eine Endstufe nachgeschaltet, über die die Zündimpulse verstärkt werden und von dort zu einem den Laststrom schaltenden Triac gelangen.

Die Komparatorschaltung, die der Geberüberwachung dient und den Istwert mit einem Sollwert vergleicht, besteht beispielsweise aus zwei Transistoren, von denen je einer in die beiden Steuerleitungen des Speicher-Flip-Flops geschaltet ist. Die Eingangs- bzw. Basiselektroden dieser Transistoren sind dann mit den Abgriffen für den Istwert bzw. den Sollwert am Ausgang einer Geberschaltung verbunden. Die Transistoren der Komparatorschaltung können beispielsweise auch aus je einem Komplementär-Darlington-Transistor bestehen.

Um definierte Stromverhältnisse zu erhalten und um sicherzustellen, dass die vom Nulldurchgangsdetektor abgegebenen Impulse symmetrisch zum Nulldurchgangspunkt des Wechselstroms sind, wird bei der erfindungsgemässen Schaltung das Prinzip der Stromspiegelung mit Hilfe von Multi-Kollektortransistoren ausgenutzt. Der Nulldurchgangsdetektor enthält zumindest in einer Schaltstrecke einen Multi-Kollektortransistor, wobei einer dieser Kollektoren die Komparatorschaltung mit Strom versorgt.

Die Erfindung und ihre weitere vorteilhafte Ausgestaltung soll im folgenden noch anhand eines Ausführungsbeispiels näher erläutert werden.

0008053

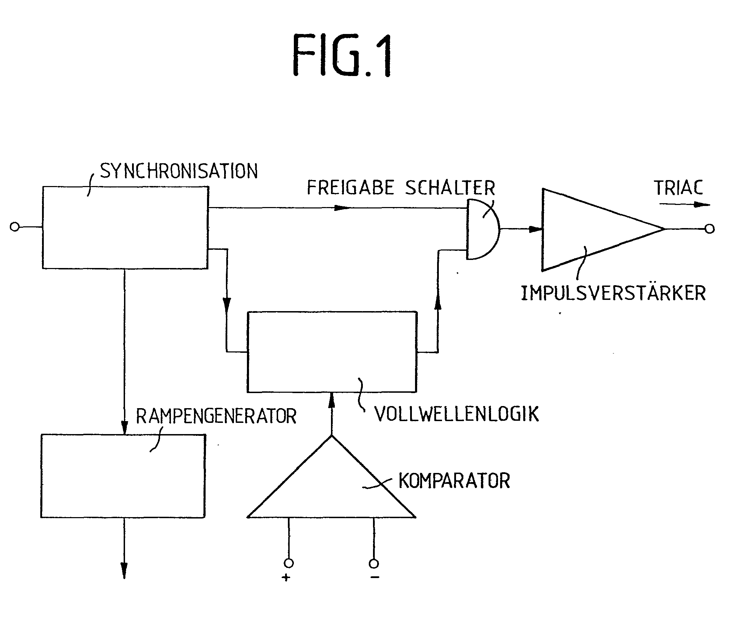

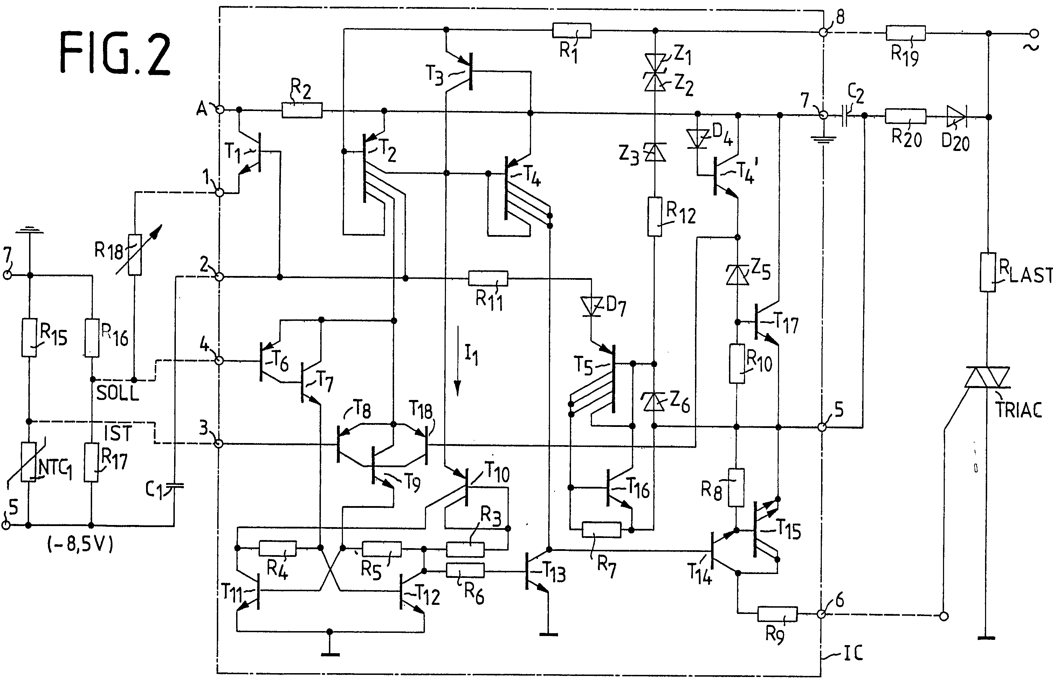

Die Fig. 1 zeigt ein Blockschaltbild, während in der Fig. 2 der Aufbau der Schaltung in ihrer Gesamtheit dargestellt ist.

Nach dem vereinfachten bekannten Blockschaltbild in der Fig. 1 erzeugt eine Synchronisierstufe im Nulldurchgang jeder Halbwelle der Netzspannung einen Synchronisierimpuls. Zusammen mit der Vollwellenlogik wird durch den Komparator entsprechend der an seinen Eingängen anstehenden Information entschieden, ob diese von der Synchronisierstufe abgegebenen Impulse durch das Freigabegatter an den Impulsverstärker weitergegeben und zur Durchsteuerung des Triacs verwendet werden.

In der Fig. 2 ist die die Erfindung enthaltende Detailschaltung dargestellt, wobei der gestrichelt begrenzte Teil der Schaltung durch einen integrierten monolithischen Halbleiterschaltkreis gebildet wird. Wie aus der Aussenbeschaltung ersichtlich ist, dient die Schaltung beispielsweise zur Steuerung eines Triacs, über den der Laststrom durch einen Lastwiderstand $R_{Last}$ geschaltet wird. Dieser Lastwiderstand wird beispielsweise von einer Heizwicklung in einer Herdplatte oder in einem Haartrockner gebildet. Den einzelnen in der Fig. 2 dargestellten Schaltteilen kommt folgende Funktion zu:

Die beiden gegeneinander geschalteten Dioden $Z_1$ und $Z_2$ begrenzen zusammen mit den Widerständen $R_1$ und $R_{19}$ den Strom durch den Nulldurchgangsdetektor.

Der Transistor $T_{17}$ stellt in Verbindung mit der Zenerdiode $Z_5$ und dem Widerstand $R_{10}$ eine Begrenzerschaltung dar, die notwendig ist, um die über einen Vorwiderstand $R_{20}$ und eine Diode $D_{20}$ direkt aus dem Netz gespeiste Schaltung vor sporadisch auftretenden Netzspitzen zu schützen. Am Kondensator $C_2$ wird die Versorgungsgleichspannung erzeugt.

Die Diode $D_4$ und der Transistor $T'_4$ dienen zur Erzeugung einer schaltungsinternen Referenzgleichspannung.

Die Schaltung aus der Zenerdiode $Z_3$, dem Widerstand $R_{12}$ und der Zenerdiode $Z_6$ bildet in Verbindung mit den Transistoren $T_5$ und $T_{16}$ sowie dem Widerstand $R_7$ einen Sägezahngenerator. Zu diesem Sägezahngenerator gehört der auf- und entladbare und extern angeschaltete Kondensator $C_1$. Da diesem Kondensator $C_1$ jedoch nur während einer Halbwelle der Netzspannung ein Ladestrom zugeführt wird, ergibt sich am Kondensator $C_1$ über der Zeit aufgetragen ein treppenförmiger Spannungsverlauf. Dieser Schaltungsteil wird daher auch als Rampengenerator bezeichnet. Der Rampengenerator ermöglicht durch Überlagerung des Sollwertes mit einer nach Zeit und Amplitude vorwählbaren Sägezahnspannung das Einhalten einer maximalen Schalthäufigkeit, um damit die bei höheren Schaltfrequenzen als periodische Leuchtdichteschwankungen sichtbar werdenden Netzspannungsschwankungen zu vermeiden. Die Sägezahnspannung wird an den Pins 5 und 2 abgegriffen. Die Amplitude des Sägezahns lässt sich mit dem extern über Pin 1 an den Entkopplungstransistor $T_1$ angeschlossenen Potentiometer $R_{18}$ einstellen.

Die Transistoren $T_2$, $T_3$ und $T_4$ bilden den Nulldurchgangsdetektor, durch den bei jedem Nulldurchgang der Netzspannung ein Impuls über den Kollektor des Transistors $T_4$ abgegeben wird.

Die Transistoren $T_6$, $T_7$, $T_8$, $T_9$ und $T_{18}$ bilden den Komparator. Dieser Komparator ist mit der externen Geber-Schaltung aus den Widerständen $R_{15}$, $R_{16}$, $R_{17}$ und dem temperaturabhängigen Widerstand $NTC_1$ verbunden.

An den Komparator ist das Speicher-Flip-Flop aus den Transistoren $T_{11}$ und $T_{12}$ und den Widerständen $R_4$ und $R_5$ angeschlossen. An den Ausgang dieses Speicher-Flip-Flops ist über einen Widerstand $R_6$ ein Transistor $T_{13}$ angeschlossen, der als Freigabegatter dient. Der Transistor $T_{10}$ dient zusammen mit $R_3$ der Stromeinstellung für den Nulldurchgangsdetektor und das Speicher-Flip-Flop.

Die einander nachgeschalteten Transistoren $T_{14}$ und $T_{15}$ bilden die Verstärkerendstufe für die über den Widerstand $R_9$ zum Triac gelangenden Zündimpulse.

Beim Nulldurchgangsdetektor wird der Transistor $T_2$ in Emitterschaltung betrieben. Dieser Transistor weist beispielsweise vier Kollektoren auf, von denen einer zur Basis zurückgekoppelt und an das Netz angeschlossen ist. Der zweite Kollektor ist an die Komparatorschaltung angeschlossen, während ein dritter Kollektor mit dem Sägezahngenerator in Verbindung steht. Schliesslich ist der vierte Kollektor an den Transistor $T_{10}$ angeschlossen. Der Emitter des Transistors $T_2$ ist gegen Masse geschaltet. Über diesen Transistor $T_2$ kann in der negativen Halbwelle der Netzspannung der Strom $I_1$ gegen Masse abfliessen.

Während der positiven Halbwelle der Netzspannung fliesst dieser Strom $I_1$ über den in Basisschaltung betriebenen Transistor $T_3$ ab. Der Emitter dieses Transistors $T_3$ ist daher über die Widerstände $R_1$ und $R_{19}$ an die Netzspannung angeschlossen, die Basiselektrode liegt auf Massepotential, während die Kollektorelektrode mit dem Transistor $T_{10}$ verbunden ist. Nur in den Nulldurchgangsphasen der Netzspannung innerhalb der kurzen Zeitspanne, in der die Transistoren $T_2$ und $T_3$ sperren, wird der Transistor $T_4$ zur Abgabe eines Impulses geöffnet. Der Transistor $T_4$ ist ein Vierkollektortransistor, wobei ein Kollektor mit der Basiselektrode verbunden ist, die ihrerseits mit der Konstantstromquelle in Verbindung steht. Die übrigen drei Kollektoren sind zusammengeschaltet und gehen zu dem als Freigabegatter dienenden Transistor $T_{13}$. Wenn alle Kollektoren des Transistors $T_4$ gleich gross sind, wird der Strom $I_1$ durch den Transistor $T_4$ verdreifacht. Die Kollektorflächen des Transistors $T_4$ sind so gewählt, dass vom Transistor $T_4$ zum Nulldurchgang symmetrische Ausgangsimpulse abgegeben werden.

Der Komparator besteht aus wenigstens zwei Transistorpaaren in Komplementär-Darlington-Schaltung. Das Transistorpaar aus den Transisto-

ren $T_6$ und $T_7$ ist an den Sollwert der Geberschaltung angeschlossen. Dieser Sollwert wird beispielsweise mit Hilfe des Spannungsteilers $R_{16}$ und $R_{17}$ eingestellt. Das andere Transistorpaar aus den Transistoren $T_8$ und $T_9$ wird an den Istwert der Geberschaltung angeschlossen. Dieser Istwert ergibt sich aus dem Teilerverhältnis an den Widerständen $R_{15}$ und $NTC_1$.

Jeder Ausgang eines Transistorpaars der Komparatorschaltung ist mit einem Steuereingang des Speicher-Flip-Flops verbunden. So ist der Ausgang des Transistorpaars $T_6$, $T_7$ direkt an die Basiselektrode des Transistors $T_{12}$ und der Ausgang des Transistorpaars $T_8$, $T_9$ an die Basiselektrode des Transistors $T_{11}$ des kreuzgekoppelten Speicher-Flip-Flops aus den Transistoren $T_{11}$, $T_{12}$ und den Basiswiderständen $R_4$ und $R_5$ angeschlossen. Die Stromquelle aus dem Transistor $T_{10}$ und $R_3$ ist als Zweikollektortransistor ausgebildet, wobei einer der Kollektoren mit dem Kollektor des Transistors $T_{11}$ und der andere Kollektor über den Widerstand $R_3$ mit dem Kollektor des Transistors $T_{12}$ verbunden ist. Dieser zweite Kollektor ist zugleich auf die Steuerelektrode des Transistors $T_{10}$ zurückgekoppelt.

Die Komparatorschaltung arbeitet nun in Verbindung mit dem Speicher-Flip-Flop wie folgt:

An Pin 5 und damit auch an der Geberschaltung liegt beispielsweise eine von der Netzspannung abgeleitete negative Gleichspannung von z. B. −8,5 V. An Pin 7 liegt Massepotential. Wenn kein Laststrom fliesst, und damit beispielsweise eine Heizwicklung abkühlt, wird auch der Widerstand des Thermofühlers $NTC_1$ grösser. Dadurch wird das Potential zwischen dem Widerstand $R_{15}$ und dem Thermofühler $NTC_1$, das auch am Istwerteingang 3 anliegt, positiver, und bei einer vorgegebenen Abweichung vom an Pin 4 anliegenden Sollwert sperrt das Transistorpaar $T_8$, $T_9$, über die dadurch in den leitenden Zustand übergehenden Transistoren $T_6$, $T_7$ wird der Speichertransistor $T_{12}$ aufgesteuert.

Am Kollektor von $T_{12}$ fällt das Potential auf Bezugspotential und der Transistor $T_{13}$ wird gesperrt. Da der Umschaltvorgang des Speicher-Flip-Flops nur während einer negativen Halbwelle der Netzspannung erfolgen kann, da der Komparator nur während dieser Zeit über den Transistor $T_2$ Arbeitsstrom bekommt, ist der erste vom Nulldurchgangsdetektor abgegebene und zur Endstufe $T_{14}$ gelangende Impuls bei positivem du/dt der Netzspannung entstanden. Der davorliegende, bei negativem du/dt noch entstandene Impuls des Nulldurchgangsdetektors wurde über den zu diesem Zeitpunkt noch leitenden Transistor $T_{13}$ abgeleitet. Aufgrund der Sperrung des Transistors $T_{13}$ wird nun die Endstufe mit den Transistoren $T_{14}$ und $T_{15}$ durchgesteuert, so dass die durch die Endstufe verstärkten Zündimpulse zum Ausgang 6 und damit auf den Steuereingang des Triacs gelangen.

Nun fliesst ein Laststrom und der Thermofühler wird in der sich erhitzenden Umgebung niederohmiger. Dadurch wird das Potential an Pin 3 zunehmend negativer, bis der Istwert dem Sollwert an Pin 4 entspricht. Bei weiter ansteigendem negativem Potential an Pin 3 wird das Transistorpaar $T_8$, $T_9$ durchgeschaltet und der Transistor $T_{11}$ des Speicher-Flip-Flops wird gleichfalls leitend. Dementsprechend sperrt der Transistor $T_{12}$ und öffnet dadurch dem zum Freigabegatter gehörenden Transistor $T_{13}$. Der Umschaltvorgang kann wiederum nur während der negativen Halbwelle der Netzspannung erfolgen, so dass der letzte zur Endstufe gelangende Impuls bei negativem du/dt der Netzspannung abgegeben wird. Im positiven Nulldurchgang ist der Transistor $T_{13}$ bereits geöffnet, so dass der vom Nulldurchgangsdetektor abgegebene Impuls über den Transistor $T_{13}$ abgeleitet wird.

Der Emitterkollektorstrecke des Transistors $T_8$ ist die Emitterkollektorstrecke des Transistors $T_{18}$ parallel geschaltet. Die Steuerelektrode dieses Transistors $T_{18}$ führt zum Emitteranschluss des Transistors $T'_4$, an dem eine Referenzspannung abgegriffen wird. Durch diesen zusätzlichen Transistor $T_{18}$ wird sichergestellt, dass der Transistor $T_{11}$ des Speicher-Flip-Flops auch dann leitend bleibt, wenn an beiden Komparatoreingängen 3 und 4 eine Spannung liegt, die positiver ist als die Referenzspannung. In diesem Fall wird ein Einschalten des Laststroms verhindert.

Die Stromquelle mit dem Transistor $T_{10}$ gibt beispielsweise einen Strom von 40 µA ab. Dann fliesst im Kollektorstrompfad des Transistors $T_{13}$ ein dreimal so grosser Strom von ca. 120 µA. Der verstärkte Ausgangsstrom an Pin 6 hat die Grösse von ca. 130 mA. Bei den Transistoren $T_2$, $T_3$, $T_4$, $T_5$, $T_6$, $T_8$ und $T_{10}$ handelt es sich beispielsweise um pnp-Transistoren, zu denen die Transistoren $T_7$, $T_9$, $T_{11}$, $T_{12}$, $T_{13}$, $T_{14}$, $T_{15}$ und $T_{17}$ komplementär sind. Der zwischen Pin 2 und Pin 5 geschaltete Kondensator $C_1$ ist − wie bereits erwähnt − der die Zeitkonstante bestimmende Kondensator des Sägezahngenerators. Beim Erreichen der durch die Dioden $Z_6$ und $D_7$ vorgegebenen Zündschwelle schaltet der aus $T_5$ und $T_{16}$ gebildete Thyristor des Sägezahngenerators durch und entlädt den externen Kondensator $C_1$. Nach der Entladung des Kondensators gehen $T_{16}$ und $T_5$ wieder in den Sperrzustand über und der Aufladevorgang des Kondensators $C_1$ beginnt von vorne. Es wurde bereits darauf hingewiesen, dass mit diesem Rampengenerator das Einhalten einer maximalen Schalthäufigkeit erzwungen werden kann, indem man dem Sollwert an der Geberschaltung die Sägezahnspannung überlagert. Andererseits ist es durch einfachen Vergleich der Rampenspannung mit einer einstellbaren Gleichspannung möglich, einen extrem einfachen Leistungssteller zu realisieren.

Es sei nochmals darauf hingewiesen, dass mit der erfindungsgemässen Schaltung im Nulldurchgang der Netzspannung jeweils geschaltet wird, so dass Schaltoberwellen vermieden werden. Ausserdem lässt sich mit der Schaltung eine von der Leistung abhängige maximale Schalthäufigkeit einstellen. Die Schaltung hat eine geringst mögliche Leistungsaufnahme der Steuerelektronik und ist unempfindlich gegen Netzspannungsspitzen.

**Patentansprüche**

1. Ansteuerschaltung mit einem Nulldurchgangsdetektor ($T_2$, $T_3$, $T_4$), der zwei Schaltstrecken ($T_2$, $T_3$) aufweist, die wechselweise während der beiden Halbwellen eines Wechselstroms stromführend sind und die beide in den Nulldurchgangsphasen des Wechselstroms gesperrt bleiben sowie mit einem Komparator ($T_6$, $T_7$, $T_8$, $T_9$, $T_{18}$) und einer an den Komparator und den Nulldurchgangsdetektor angeschlossenen Logik ($T_{11}$, $T_{12}$, $R_4$, $R_5$), dadurch gekennzeichnet, dass der Komparator zwischen die Logik und eine der beiden Schaltstrecken ($T_2$) des Nulldurchgangsdetektors derart geschaltet ist, dass der während einer Halbwelle des Wechselstroms stromführende Komparator nur während dieser Halbwelle eine Umschaltung der Logik und damit eine An- oder Abschaltung der Steuerlast auslösen kann.

2. Ansteuerschaltung nach Anspruch 1, dadurch gekennzeichnet, dass die Logik aus einem Speicher-Flip-Flop ($T_{11}$, $T_{12}$, $R_4$, $R_5$) besteht, dessen Steuerleitung mit dem Komparator ($T_6$, $T_7$, $T_8$, $T_9$, $T_{18}$) verbunden sind.

3. Ansteuerschaltung nach Anspruch 2, dadurch gekennzeichnet, dass an den Ausgang des Speicher-Flip-Flops ($T_{11}$, $T_{12}$, $R_4$, $R_5$) eine Gatterschaltung ($T_{13}$) angeschlossen ist, deren zweiter Eingang an die nur in den Nulldurchgangsphasen des Wechselstroms einen Gleichstrom führende Schaltstrecke ($T_4$) des Nulldurchgangsdetektors ($T_2$, $T_3$, $T_4$) angeschlossen ist.

4. Ansteuerschaltung nach Anspruch 3, dadurch gekennzeichnet, dass das Gatter aus einem Transistor ($T_{13}$) besteht, dessen Steuerelektrode an den Ausgang des Speicher-Flip-Flops ($T_{11}$, $T_{12}$, $R_4$, $R_5$) und dessen Kollektor an den Nulldurchgangsdetektor ($T_2$, $T_3$, $T_4$) angeschlossen ist.

5. Ansteuerschaltung nach Anspruch 3 und 4, dadurch gekennzeichnet, dass an den Ausgang des Gatters ($T_{13}$) eine Endstufe ($T_{14}$, $T_{15}$) angeschlossen ist, über die ein Triac als Leistungsschalter gesteuert wird.

6. Ansteuerschaltung nach Anspruch 1 oder 2, dadurch gekennzeichnet, dass die Komparatorschaltung aus zwei Transistoren ($T_6$, $T_8$) besteht, von denen je einer in die beiden Steuerleitungen des Speicher-Flip-Flops ($T_{11}$, $T_{12}$, $R_4$, $R_5$) geschaltet ist, und deren Eingangselektroden mit dem Ist- bzw. dem Sollwert-Ausgang einer Geberschaltung ($R_{15}$, $R_{16}$, $R_{17}$, $NTC_1$) verbunden sind.

7. Ansteuerschaltung nach Anspruch 6, dadurch gekennzeichnet, dass die Transistoren der Komparatorschaltung aus je einem Komplementär-Darlington-Transistor ($T_6$, $T_7$ bzw. $T_8$, $T_9$) bestehen.

8. Ansteuerschaltung nach Anspruch 6 oder 7, dadurch gekennzeichnet, dass die Emitter-Kollektorstrecke eines Eingangstransistors ($T_8$) der Komparatorschaltung durch die Emitter-Kollektorstrecke eines zusätzlichen Transistors ($T_{18}$) gleicher Zonenfolge überbrückt ist, an dessen Basiselektrode eine intern erzeugte Referenzspannung anliegt.

9. Ansteuerschaltung nach Anspruch 1, dadurch gekennzeichnet, dass die Schaltstrecken des Nulldurchgangsdetektors Transistoren ($T_2$, $T_3$, $T_4$) enthalten, von denen zumindest der mit dem Komparator verbundene Transistor ($T_2$) ein Multi-Kollektortransistor ist.

**Claims**

1. A trigger circuit with a zero axis crossing detector ($T_2$, $T_3$, $T_4$) which has two switching paths ($T_2$, $T_3$) which carry current alternately during the two half waves of an a.c. current and which are both blocked during the zero axis crossing phases of the a.c. current and having a comparator ($T_6$, $T_7$, $T_8$, $T_9$, $T_{13}$) and a logic unit ($T_{11}$, $T_{12}$, $R_4$, $R_5$) connected to the comparator and the zero axis crossing detector, characterised in that the comparator is connected between the logic unit and one of the two switching paths ($T_2$) of the zero axis crossing detector such that the comparator which carries current during one half wave of the a.c. current is only able to initiate switch over of the logic unit and therefore to initiate connection and disconnection of the control load during this half wave.

2. A trigger circuit according to claim 1 characterised in that the logic unit comprises a storage trigger stage ($T_{11}$, $T_{12}$, $R_4$, $R_5$) of which the control lines are connected to the comparator ($T_6$, $T_7$, $T_8$, $T_9$, $T_{13}$).

3. A trigger circuit according to claim 2 characterised in that a gate circuit ($T_{13}$) is connected to the output of the storage trigger stage ($T_{11}$, $T_{12}$, $R_4$, $R_5$), the second input of the said gate circuit being connected to the switching path ($T_4$) of the zero axis crossing detector ($T_2$, $T_3$, $T_4$), said switching path only carrying a d.c. current in the zero axis crossing phase of the a.c. current.

4. A trigger circuit according to claim 3 characterised in that the gate comprises a transistor ($T_{13}$), the control electrode of the said transistor being connected to the output of the storage trigger stage ($T_{11}$, $T_{12}$, $R_4$, $R_5$) and its collector being connected to the zero axis crossing detector ($T_2$, $T_3$, $T_4$).

5. A trigger circuit according to claim 3 and 4 characterised in that an end stage ($T_{14}$, $T_{15}$) is connected to the output of the gate ($T_{13}$) and a triac is controlled as a circuit breaker by means of the said end stage.

6. A trigger circuit according to claim 1 or 2 characterised in that the comparator circuit comprises two transistors ($T_6$, $T_8$) one of which in each case being connected into the two control lines of the storage trigger stage ($T_{11}$, $T_{12}$, $R_4$, $R_5$) and the input electrodes being connected to the actual or the desired value output of a generator circuit ($R_{15}$, $R_{16}$, $R_{17}$, NTC).

7. A trigger circuit according to claim 6 characterised in that the transistors of the comparator circuit comprise a complementary Darlington transistor pair ($T_6$, $T_7$ or $T_8$, $T_9$) in each case.

8. A trigger circuit according to claim 6 or 7 characterised in that the emitter collector path of an input transistor ($T_8$) of the comparator circuit is bridged by the emitter-collector path of an additional transistor ($T_{18}$) which has the same sequence of zones, an internally generated reference voltage being applied to the base electrode of the said additional transistor.

9. A trigger circuit according to claim 1 characterised in that the switching paths of the zero axis crossing detector contain transistors ($T_2$, $T_3$, $T_4$) of which at least the transistor ($T_2$) which is connected to the comparator is a multi-collector transistor.

**Revendications**

1. Circuit de déclenchement comprenant un détecteur de passage par zéro ($T_2$, $T_3$, $T_4$) deux circuits de commutation ($T_2$, $T_3$) qui conduisent chacun pendant une alternance d'un courant alternatif et sont bloqués tous les deux pendant les phases de passage par zéro du courant alternatif, un comparateur ($T_6$, $T_7$, $T_8$, $T_9$, $T_{18}$) et un logique ($T_{11}$, $T_{12}$, $R_4$, $R_5$) reliée au comparateur et au détecteur de passage par zéro, ledit circuit de déclenchement étant caractérisé en ce que le comparateur est inséré entre la logique et un des deux circuits de commutation ($T_2$) du détecteur de passage pa zéro, de façon que le comparateur conducteur pendant une alternance du courant alternatif ne peut commuter la logique et par suite connecter ou déconnecter la charge commandée que pendant ladite alternance.

2. Circuit de déclenchement selon revendication 1, caractérisé en ce que la logique est constituée par une bascule de mémoire ($T_{11}$, $T_{12}$, $R_4$, $R_5$), dont les lignes de commande sont reliées au comparateur ($T_6$, $T_7$, $T_8$, $T_9$, $T_{18}$).

3. Circuit de déclenchement selon revendication 2, caractérisé en ce que la sortie de la bascule de mémoire ($T_{11}$, $T_{12}$, $R_4$, $R_5$) est reliée à un opérateur ($T_{13}$), dont la seconde entrée est reliée au circuit de commutation ($T_4$) du détecteur de passage par zéro ($T_2$, $T_3$, $T_4$), qui est parcouru par un courant continu uniquement pendant les phases de passage par zéro du courant alternatif.

4. Circuit de déclenchement selon revendication 3, caractérisé en ce que l'opérateur est constitué par un transistor ($T_{13}$), dont l'électrode de commande est reliée à la sortie de la bascule de mémoire ($T_{11}$, $T_{12}$, $R_4$, $R_5$) et dont le collecteur est relié au détecteur de passage par zéro ($T_2$, $T_3$ $T_4$).

5. Circuit de déclenchement selon revendications 3 et 4, caractérisé en ce que la sortie de l'opérateur ($T_{13}$) est reliée à un étage de sortie ($T_{14}$, $T_{15}$), qui commande un triac constituant un interrupteur de puissance.

6. Circuit de déclenchement selon une des revendications 1 ou 2, caractérisé en ce que le comparateur est constitué par deux transistors ($T_6$, $T_8$), dont chacun est inséré dans les deux lignes de commande de la bascule de mémoire ($T_{11}$, $T_{12}$, $R_4$, $R_5$) et dont les électrodes d'entrée sont reliées à la sortie de valeur mesurée ou de consigne d'un circuit détecteur ($R_{15}$, $R_{16}$, $R_{17}$, CTN₁).

7. Circuit de déclenchement selon revendication 6, caractérisé en ce que les transistors du comparateur sont constitués chacun par un transistor Darlington complémentaire ($T_6$, $T_7$ ou $T_8$, $T_9$).

8. Circuit de déclenchement selon une des revendications 6 ou 7, caractérisé en ce que le circuit émetteur-collecteur d'un transistor d'entrée ($T_8$) du comparateur est shunté par le circuit émetteur-collecteur d'un transistor additionnel ($T_{18}$) de même type et à l'électrode de base duquel est appliquée une tension de référence produite intérieurement.

9. Circuit de déclenchement selon revendication 1, caractérisé en ce que les circuits de commutation du détecteur de passage par zéro contiennent des transistors ($T_2$, $T_3$, $T_4$), dont au moins le transistor ($T_2$) relié au comparateur est un transistor multicollecteur.

# FIG.1

SYNCHRONISATION    FREIGABE SCHALTER    TRIAC

IMPULSVERSTÄRKER

RAMPENGENERATOR    VOLLWELLENLOGIK

KOMPARATOR

+    —

FIG.2

0008053